Europäisches Patentamt

European Patent Office

Office européen des brevets

(11) Numéro de publication: **0 272 168 B1**

(12) **FASCICULE DE BREVET EUROPEEN**

(45) Date de publication de fascicule du brevet: **13.05.92** (51) Int. Cl.5: **H05B 6/80**

(21) Numéro de dépôt: **87402480.5**

(22) Date de dépôt: **03.11.87**

(54) **Dispositif pour l'échauffement rapide d'un produit diélectrique par micro-ondes.**

(30) Priorité: **07.11.86 FR 8615605**

(43) Date de publication de la demande:
**22.06.88 Bulletin 88/25**

(45) Mention de la délivrance du brevet:
**13.05.92 Bulletin 92/20**

(84) Etats contractants désignés:
**AT BE CH DE ES GB GR IT LI LU NL SE**

(56) Documents cités:
**EP-A- 0 089 705**
**FR-A- 2 489 647**
**FR-A- 2 542 009**
**US-A- 2 704 802**

(73) Titulaire: **CENTRE NATIONAL DE LA RECHER-CHE SCIENTIFIOUE (CNRS)**
**15, Ouai Anatole France**
**F-75700 Paris Cedex 07(FR)**

(72) Inventeur: **Germain, Alain**
**6 avenue J.B. Fortin**
**F-92220 Bagneux(FR)**
Inventeur: **Berteaud, André**
**10 allée des Marronniers**
**F-91210 Draveil(FR)**
Inventeur: **Galtier, François**
**21 rue Bonaparte**
**F-75006 Paris(FR)**

(74) Mandataire: **Peaucelle, Chantal et al**
**S.C. Ernest Gutmann - Yves Plasseraud 67,**
**boulevard Haussmann**
**F-75008 Paris(FR)**

## Description

La présente invention est relative à un dispositif permettant l'échauffement rapide et homogène d'un produit présentant des propriétés diélectriques au moyen d'ondes électromagnétiques, connues généralement sous le terme de micro-ondes.

On connaît déjà par exexmple par le FR-A-2 542 009 ou le FR-A-2 489 647, diverses réalisations de dispositifs de chauffage de ce genre, communément appelés fours à microondes, ayant des applications soit dans le domaine de l'électroménager pour la cuisson rapide de produits consommables, soit au niveau du laboratoire ou de l'industrie alimentaire ou pharmaceutique, pour réaliser de façon sûre et rapide la stérilisation de produits liquides ou autres, conditionnés en récipients fermés et étanches, du genre d'ampoules ou de flacons bouchés par des capsules hermétiques, éventuellement propres à être percées par l'aiguille ou le trocart d'un dispositif de prélèvement du produit contenu dans le récipient, dans des conditions rigoureuses d'asepsie.

Vis-à-vis des solutions antérieures, où la stérilisation s'effectue par passage en autoclave ou par induction d'un courant électrique dans le matériau du récipient si celui-ci est métallique et apte à conduire l'électricité, les dispositifs à micro-ondes présentent de nombreux avantages, en particulier quant à la rapidité du processus mis en oeuvre et à l'obtention au sein du produit à chauffer ou à stériliser d'une température élevée, sans risques de détérioration de l'emballage ou du récipient contenant ce produit avec une consommation minimal et sans pertes, toute l'énergie électromagnétique étant transformée en chaleur au coeur du produit.

Toutefois, cette solution à chauffage par microondes présente également certains défauts. Notamment, dans les réalisations actuelles, le produit est disposé dans un four ou plus généralement dans une enceinte ou ensemble applicateur de l'énergie électromagnétique dont les trois dimensions sont, dans une première approche de cette solution, de l'ordre de grandeur de la demi-longueur d'onde effective à l'intérieur de l'ensemble applicateur, appelée longueur d'onde guidée du rayonnement électromagnétique. Un tel applicateur est alors dit monomode, car tout autre mode de résonance possible correspond à des fréquences très sensiblement différentes de l'onde d'excitation. En d'autres termes, dans une telle réalisation, un seul mode de résonance du champ électromagnétique peut être excité pour la bande de fréquence utilisée qui, selon les règlements en vigueur, notamment en France, est comprise entre 2440 MHZ et 2460 MHZ. Il en résulte que la distribution du champ dans le volume de l'applicateur est précisément définie avec des points où le champ est nul et des points où il est maximal. L'échauffement du produit n'est donc pas du tout homogène dans le volume de celui-ci, sauf si sa forme ou celle du récipient qui le contient est spécialement adaptée à la distribution du champ (tige, plan, etc...), ce qui n'est pas le cas ordinaire, surtout lorsque l'applicateur doit pouvoir traiter des produits différents, dans leur forme et leur contenu. En règle générale, le produit provoque une perturbation totale du champ qui ne peut être calculée pour conduire à un couplage optimal avec le produit.

Une autre solution consiste alors à placer le produit dans un ensemble applicateur d'énergie, dont l'enceinte présente des dimensions toutes supérieures à plusieurs demi-longueurs d'ondes guidées du rayonnement utilisé, par exemple de l'ordre de dix fois celle-ci. La distribution du champ est dans ce cas multimodes , car chaque mode de résonance possible correspond alors à des fréquences très voisines de telle sorte que plusieurs modes peuvent être excités simultanément à l'intérieur de la bande de fréquences étroite autorisée.

Les enceintes pour fours à micro-ondes électroménagers sont habituellement de ce second type. Mais dans ce cas, la distribution du champ est relativement aléatoire de telle façon que l'échauffement du produit dans le four est globalement mieux réparti. Cependant, subsiste encore un inconvénient qui résulte de ce que le coefficient de remplissage de l'enceinte, exprimé par le rapport du volume du produit à celui de cette enceinte est faible, ce qui fait que seulement une partie de l'énergie électromagnétique précédente est réellement utilisée pour chauffer ou stériliser le produit qui se trouve éloigné des parois. Le rendement est donc particulièrement médiocre, au détriment de la rapidité et de l'efficacité du système.

Pour améliorer ce rendement, on a déjà prévu de disposer dans l'enceinte de l'applicateur plusieurs produits de volumes unitaires plus faibles, placés côte à côte. Ces volumes unitaires se comportent alors comme autant d'antennes réceptrices couplées. De ce fait, leur comportement est très complexe et dépend des volumes respectifs, de leurs distances mutuelles, de leurs orientations, etc... Il devient alors impossible de contrôler efficacement et indépendamment l'échauffement de chaque volume unitaire, qui peuvent dans ces conditions, être le siège de gradients thermiques importants et au total, conduire à des échauffements non homogènes préjudiciables aux résultats visés.

La présente invention met à profit ces observations, en permettant de réaliser un échauffement régulier et réparti d'un volume donné, par exemple un flacon d'eau ou contenant un autre liquide à chauffer ou à stériliser, en un temps de l'ordre de quelques minutes, au moyen d'un dispositif applicateur d'ondes électromagnétiques dont les dimensions sont choisies pour produire un couplage optimal entre le champ et le produit, ces dimensions étant déterminées pour produire dans un fonctionnement multimodes à l'intérieur de l'enceinte de l'applicateur un échauffement remarquablement homogène du volume considéré, sans atteindre cependant un fonctionnement monomode et sans par conséquent introduire les inconvénients qui en découlent.

Selon l'invention, le dispositif considéré, comportant une enceinte fermée, munie d'au moins deux sources rayonnantes délivrant à l'intérieur de l'enceinte une onde électromagnétique multimodes, se caractérise en ce que les dimensions de l'enceinte selon l'une quelconque des trois directions de l'espace sont inférieures ou égales à quatre fois la demi-longueur d'onde guidée du rayonnement émis dans la bande de fréquence étroite utilisée.

Ainsi, pour une fréquence d'émission égale à 2.450 MHZ, la demi-longueur d'onde en espace libre étant voisine de 6,12 cm et la demi-longueur d'ondes guidée étant de l'ordre de 8, 2 cm, on choisira les dimensions de l'enceinte au plus égales à 24,5 cm dans chaque direction.

Dans un mode de réalisation particulier, l'enceinte présente un volume parallélépipédique, notamment cubique dont les trois dimensions sont égales. En variante, l'enceinte peut présenter des dimensions égales respectivement à 20, 22 et 24,5 cm. Le produit est situé dans l'enceinte de telle sorte que son centre géométrique coïncide à peu près avec celui de l'enceinte.

Ainsi, avec un produit placé dans un flacon dont la contenance est voisine de un litre, présentant un diamètre de 9 cm et une hauteur de 16 cm environ, placé au centre d'une enceinte du genre ci-dessus, où les antennes sont espacées de 17 cm et rayonnent une énergie de 1 KW à la fréquence de 2450 MHZ, on constate une montée en température sensiblement linéaire jusqu'à 130°C environ, sous 3 bars de pression, le gradient thermique entre deux points quelconques du flacon étant toujours inférieur à 3 ou 4°C. Le flacon est placé dans l'enceinte à environ 5 cm au-dessus du fond de celle-ci.

Dans une autre variante de réalisation, l'enceinte présente un volume cylindrique, le flacon étant placé verticalement dans l'enceinte selon l;axe de celle-ci.

Les sources de rayonnement dans l'enceinte peuvent être constituées par des antennes faisant saillie dans l'enceinte et couplant celle-ci avec un guide latéral, amenant le rayonnement aux antennes, ou par des fentes prévues dans le guide au droit de l'enceinte faisant communiquer le guide avec celle-ci, ou encore par tout autre moyen de couplage électromagnétique approprié.

De façon générale, l'enceinte est placée sous pression d'un gaz inerte de façon à équilibrer l'élévation de pression due à la montée de la température du produit dans le flacon et comporte un orifice d'accès à l'intérieur de l'enceinte pour l'introduction du flacon, cet orifice étant normalement hermétiquement fermé pour tenir la pression dans l'enceinte.

D'autres caractéristiques d'un dispositif pour l'échauffement rapide d'un produit diélectrique selon l'invention, apparaîtront encore à travers la description qui suit de deux exemples de réalisation, donnés ci-après à titre purement indicatif et non limitatif, en référence au dessin annexé sur lequel :
- La Figure 1 est une vue schématique en perspective d'une enceinte d'applicateur d'énergie selon un premier mode d'exécution de l'invention.
- La Figure 2 est une vue également en perspective d'une autre variante.

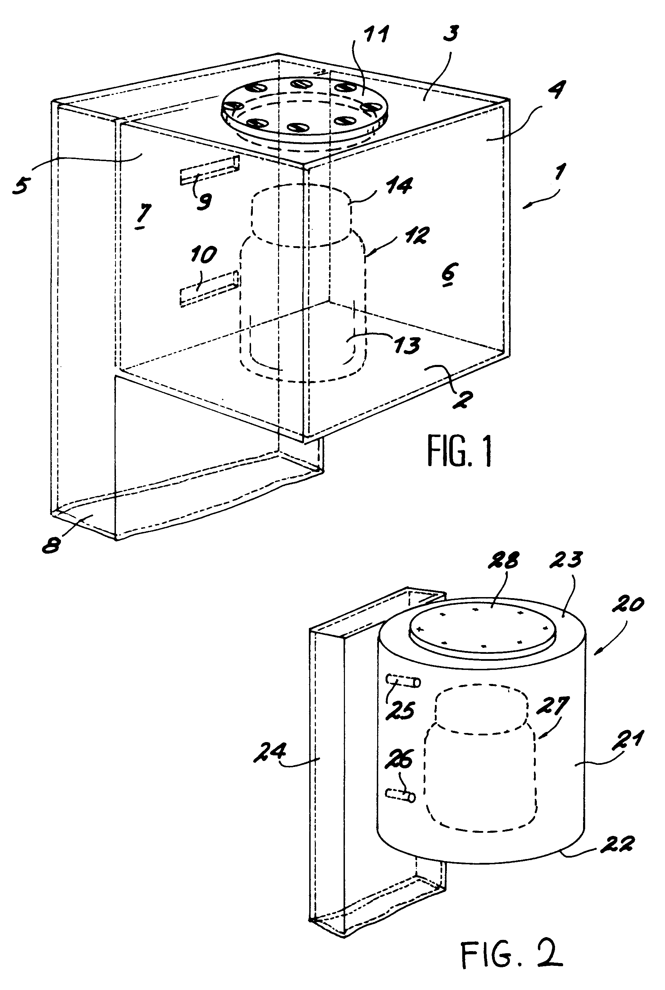

Selon la Figure 1, l'enceinte de l'applicateur d'énergie, désignée dans son ensemble sous la référence 1, est constituée par un coffret ou analogue de forme parallélépipédique, ici sensiblement cubique, comportant une base 2 et un couvercle 3, ainsi que quatre parois latérales respectivement 4, 5, 6 et 7. La structure de cette enceinte est conforme aux règles de l'art de la construction des fours ou autres dispositifs de chauffage ou de stérilisation à micro-ondes, notamment en ce qui concerne la liaison entre les parois de l'enceinte, leurs revêtements intérieur et extérieur, l'étanchéité de l'ensemble, etc... La paroi de fond 7 de l'enceinte fait partie d'un guide d'ondes 8 dont les dimensions sont déterminées, selon la fréquence du rayonnement, ici choisi entre 2440 MHZ et 2460 MHZ, pour permettre la propagation de l'onde électromagnétique.

Dans la paroi 7 sont en outre prévues deux fentes, respectivement 9 et 10 permettant au rayonnement de sortir du guide pour s'établir dans l'enceinte 1. Le couvercle 3 de celle-ci est fermé par une plaque amovible 11 vissée ou fixée par tout autre moyen sur ce couvercle, cette plaque permettant d'accéder librement à l'intérieur de l'enceinte. A l'évidence, on pourrait aussi bien envisager de substituer à la plaque une porte pivotante ou autre, du moment que le moyen d'accès à l'intérieur de l'enceinte peut fermer celle-ci de façon étanche, notamment en raison de la pression d'un gaz inerte à y maintenir, qui en règle générale est voisine de 3 bars. Sur le dessin, les moyens permettant d'établir et de régler cette pression ne sont pas représentés mais sont en eux-mêmes classiques.

A l'intérieur de l'enceinte 1 est disposé un objet 12, par exemple un flacon 13 en verre ou autre matériau diélectrique, plastique ou non, fermé par un bouchon étanche 14, ce flacon contenant le produit à chauffer ou stériliser. De préférence, le bouchon 14 est en un matériau souple, du genre caoutchouc ou analogue, permettant les prélèvements dans le produit par une aiguille ou un trocart, sans altérer les conditions de stérilité réalisées dans le flacon.

Selon l'invention, les dimensions de chaque côté de l'enceinte 1 sont comprises entre 20 et 30 cm, de préférence de l'ordre de 25 cm, soit environ trois fois la demi-longueur d'onde guidée du rayonnement pour la fréquence considérée. Le flacon a une contenance d'environ 1 litre, et présente un diamètre de 9 cm environ et une hauteur de 16 cm. Les fentes du guide constituant les sources de rayonnement dans l'enceinte sont espacées d'environ 17 cm, l'énergie du rayonnement étant égale à 1 kW pour une fréquence de 2450 MHZ. Avec ces paramètres, on constate comme déjà indiqué, une élévation de température dans le produit pratiquement linéaire, jusqu'à 130° C sous 3 bars de pression, avec un gradient thermique relevé au moyen d'une sonde immergée en divers points du flacon, toujours inférieur à 3 ou 4°C. Le flacon est disposé sur un socle (non représenté), à environ 5 cm de la base de l'enceinte.

Dans la variante de réalisation illustrée sur la Figure 2, l'enceinte 20 est ici cylindrique et comporte une paroi latérale 21, une base 22 et un couvercle 23. Le guide d'ondes 24 est couplé à l'enceinte au moyen de deux antennes 25 et 26 faisant saillie à l'intérieur de l'enceinte. Le flacon 27 est placé dans l'axe et sensiblement au centre de celle-ci. Une plaque 28 ferme de façon étanche l'ouverture permettant d'accéder au flacon dans l'enceinte. A nouveau, les dimensions de celle-ci sont choisies selon l'invention dans le rapport de 3 à 4 avec la demi-longueur d'onde guidée du rayonnement.

On réalise ainsi un applicateur d'énergie à microondes de conception très simple mais qui présente vis-à-vis des solutions actuellement connues, des avantages remarquables, en permettant notamment le chauffage rapide et homogène du produit à chauffer u stériliser. Les applications envisageables sont nombreuses, en particulier pour toute opération de stérilisation de solutés injectables ou non, pour lesquels l'homogénéité de l'échauffement est indispensable à la garantie d'une stérilisation complète de l'ensemble de ce produit à l'intérieur du flacon ou du récipient qui le contient. D'autres applications peuvent également être proposées, pour la déshydratation de substrats utilisés pour le piégeage de produits polaires du genre des zéolites ou des fibres céramiques, captant de l'eau ou des solvants. Enfin, le dispositif de l'invention pourrait être aisément adapté à la régénération de filtres, par exemple du genre des pots catalytiques de véhicules.

## Revendications

1. Dispositif pour l'échauffement rapide d'un produit diélectrique par micro-ondes, comportant une enceinte fermée (1), munie d'au moins deux sources rayonnantes (9-10) délivrant à l'intérieur de l'enceinte une onde électromagnétique multimodes, caractérisé en ce que les dimensions de l'enceinte selon chacune des trois directions de l'espace sont inférieures ou égales à quatre fois la demi-longueur d'onde guidée du rayonnement émis dans la bande de fréquences étroite utilisée.

2. Dispositif selon la revendication I, caractérisé en ce que l'enceinte (1) présente un volume parallélépipédique, notamment cubique, ou cylindrique.

3. Dispositif selon la revendication 1, caractérisé en ce que pour une fréquence du rayonnement égale à 2450 MHZ, les dimensions de l'enceinte sont comprises entre 20 et 30 cm.

4. Dispositif selon l'une quelconque des revendications 1 à 3, caractérisé en ce que les sources de rayonnement sont constituées par des antennes (25-26) ou des fentes (9-10) de couplage de l'enceinte (1) avec un guide (8-24) de transmission de l'onde électromagnétique.

5. Dispositif selon l'une quelconque des revendications 1 à 4, caractérisé en ce que l'enceinte (1) est placée sous pression d'un gaz inerte.

6. Utilisation du dispositif selon l'une quelconque des revendications 1 à 5, pour le chauffage d'un produit contenu dans un flacon étanche placé sensiblement au centre de l'enceinte.

## Claims

1. Apparatus for the rapid heating of a dielectric product by microwaves, incorporating a sealed enclosure (1), provided with at least two radiation sources (9,10) supplying a multimode electromagnetic wave within the enclosure, characterized in that the enclosure dimensions in accordance with each of the three directions in space are equal to or less than four times half the guided wavelength of the radiation emitted in the narrow frequency band used.

2.  Apparatus according to claim 1, characterized in that the enclosure (1) has a parallelepipedic and in particular cubic, or cylindrical volume.

3.  Apparatus according to claim 1, characterized in that for a frequency of the radiation of 2450 MHZ, the dimensions of the enclosure are between 20 and 30 cm.

4.  Apparatus according to any one of the claims 1 to 3, characterized in that the radiation sources are constituted by antennas (25,26) or slots (9,10) for coupling the enclosure (1) to an electromagnetic wave transmission guide (8,24).

5.  Apparatus according to any one of the claims 1 to 4, characterized in that the enclosure (1) is placed under the pressure of an inert gas.

6.  Use of the apparatus according to any one of the claims 1 to 5 for heating a product contained in a tight bottle substantially placed in the centre of the enclosure.

**Patentansprüche**

1.  Vorrichtung zum schnellen Erhitzen eines dielektrischen Produkts durch Mikrowellen mit einem geschlossenen Gehäuse (1), das mindestens zwei strahlende Quellen (9-10) aufweist, die eine elektromagnetische Multimode-Welle in das Innere des Gehäuses aussenden, dadurch gekennzeichnet, daß die Abmessungen des Gehäuses in allen drei Richtungen des Raumes kleiner oder gleich viermal der halben eingeleiteten Wellenlänge der im verwendeten schmalen Frequenzbereich ausgesandten Strahlung sind.

2.  Vorrichtung nach Anspruch 1, dadurch gekennzeichnet, daß das Gehäuse (1) ein parallelepipedförmiges, insbesondere kubisches oder zylindrisches Volumen aufweist.

3.  Vorrichtung nach Anspruch 1, dadurch gekennzeichnet, daß die Abmessungen des Gehäuses bei einer strahlungsfrequenz von 2450 MHz zwischen 20 und 30 cm liegen.

4.  Vorrichtung nach einem der Ansprüche 1 bis 3, dadurch gekennzeichnet, daß die strahlungsquellen von Antennen (25-26) oder Schlitzen (9-10) gebildet werden, die das Gehäuse (1) an einen Leiter (8-24) sur Übertragung der elektromagnetischen Welle koppeln.

5.  Vorrichtung nach einem der Ansprüche 1 bis 4, dadurch gekennzeichnet, daß das Gehäuse (1) dem Druck eines inerten Gases ausgesetzt wird.

6.  Verwendung der Vorrichtung nach einem der Ansprüche 1 bis 5 zum Erhitzen eines Produkts, das in einem dichten Behälter enthalten ist, die etwa in die Mitte des Gehäuses gestellt wird.

FIG. 1

FIG. 2